# EUROPEAN PATENT SPECIFICATION

(11) **EP 1 741 002 B1**
(45) Date of publication and mention of the grant of the patent: **02.05.2012**
(21) Application number: 05710828.4
(22) Date of filing: 26.01.2005
(51) Int. Cl.: G02F 1/133, G09G 3/34

(54) **LIQUID CRYSTAL DISPLAY APPARATUS AND CONTROL METHOD THEREOF**
ANZEIGEVORRICHTUNG MIT FLÜSSIGKEITKRISTALL UND METHODE HIERFÜR
APPAREIL D'AFFICHAGE A CRISTAUX LIQUIDES ET PROCEDE DE COMMANDE ASSOCIE

(30) Priority: 27.04.2004 KR 2004028940
(43) Date of publication of application: 10.01.2007
(73) Proprietor: Samsung Electronics Co., Ltd., Yeongtong-gu Suwon-city, Gyeonggi-do 442-742 (KR)
(72) Inventor: KIM, Hyun-Suk Dongsuwon LG Village 201-806, Gyeonggi-do, 442-706 (KR); KIM, Jin-Bog Shinyoungtong Hyundae Apt. 306-1504, Gyeonggi-do, 445-984 (KR)
(74) Representative: Hylarides, Paul Jacques
(86) International application number: PCT/KR2005/000216
(87) International publication number: WO 2005/103802

(56) References cited:
- WO-A-03/077013
- GB-A- 2 369 730
- JP-A- 6 067 159
- JP-A- 10 307 286
- JP-A- 2000 321 571
- JP-A- 2002 099 250
- JP-A- 2002 140 038
- US-A1- 2002 057 412
- US-A1- 2002 070 914
- US-A1- 2003 090 455
- SEETZEN H ET AL: "54.2: A High Dynamic Range Display Using Low and High Resolution Modulators" 2003 SID INTERNATIONAL SYMPOSIUM DIGEST OF TECHNICAL PAPERS. BALTIMORE, MD, MAY 20 - 22, 2003, SID INTERNATIONAL SYMPOSIUM DIGEST OF TECHNICAL PAPERS, SAN JOSE, CA : SID, US, vol. VOL. 34 / 2, 20 May 2003 (2003-05-20), pages 1450-1453, XP007008386

## Description

### FIELD OF THE INVENTION

The present invention relates to a method and apparatus of controlling a liquid crystal display (LCD), and, more particularly, to an apparatus and method of controlling an LCD which comprises a backlight array on which a plurality of light emitting devices illuminating an LCD display panel with a plurality of colors are arranged in a predetermined pattern, and wherein the backlight array is controlled to adjust a display state of a picture.

### BACKGROUND ART

Among display apparatuses, an LCD apparatus uses a liquid crystal cell of which an inherent molecular arrangement is rearranged when a voltage is applied thereto. Such molecular rearrangement causes optical properties such as birefringence, line light, dichroism, light scattering, etc., thereby modulating light and displaying a picture.

As compared with other display apparatus such as a plasma display panel (PDP), a field emission display (FED), etc., the LCD apparatus cannot emit light itself but instead adjusts the light passing through an LCD panel, so that a separate light source is needed.

Therefore, the LCD apparatus includes a backlight unit to illuminate the LCD panel. Generally, the backlight unit includes a lamp used as a light source, a light guided panel changing light emitted from the lamp into a surface light source and enhancing photo-efficiency and brightness, a prism sheet, and an optical sheet such as a polarizer.

The lamp used as the light source is generally a fluorescent lamp such as a cold cathode fluorescent lamp (CCFL), a hot cathode fluorescent lamp (HCFL), or the like, which emits white light.

However, in an LCD apparatus using a fluorescent lamp, the whole region of color coordinates may not be available due to optical properties of the light emitted from the fluorescent lamp.

Further, the fluorescent lamp may have a long response time to a control signal of an inverter, so that the brightness, etc. thereof is not immediately adjusted as soon as the inverter outputs the control signal.

US2002/070914 discloses a backlight for a liquid crystal display panel comprising red, green and blue light-emitting diodes and wherein a colour temperature point of said backlight is regulated according to the image content to be displayed by controlling the light intensity of each of the red, green and blue light-emitting diodes.

JP2002-140038 discloses an image display device wherein a light emission ratio of several independent coloured light sources is dynamically changed in accordance to the input image data, so as to change the colour reproduction range of the displayed image.

### DISCLOSURE OF INVENTION

Accordingly, an exemplary aspect of the present invention provides an LCD apparatus and a control method thereof, which allows a picture displayed on an LCD panel to have wide range colors of color coordinates and which includes a backlight unit having a short response time.

Another exemplary aspect of the present invention provides an LCD apparatus and a control method thereof, in which a display state of a picture displayed on an LCD panel is adjusted by analyzing an input video signal and controlling a backlight unit.

The invention is defined by the claims.

### BRIEF DESCRIPTION OF DRAWINGS

The above and other aspects and features of the present invention will become more apparent from the following description of illustrative, non-limiting embodiments of the present invention, taken in conjunction with the accompany drawings in which:
FIGS. 1 and 2 are block diagrams of an LCD apparatus according to an embodiment of the present invention;
FIG. 3 illustrates a backlight unit according to an embodiment of the present invention;
FIG. 4 is a flowchart of control of an LCD apparatus according to an embodiment of the present invention; and
FIG. 5 depicts color coordinates for illustrating a transform objective region according to an embodiment of the present invention.

### MODES FOR CARRYING OUT THE INVENTION

Reference will now be made in detail to illustrative, non-limited embodiments of the present invention, examples of which are illustrated in the accompanying drawings, wherein like reference numerals refer to like elements throughout. The exemplary embodiments are described below with reference to the figures.

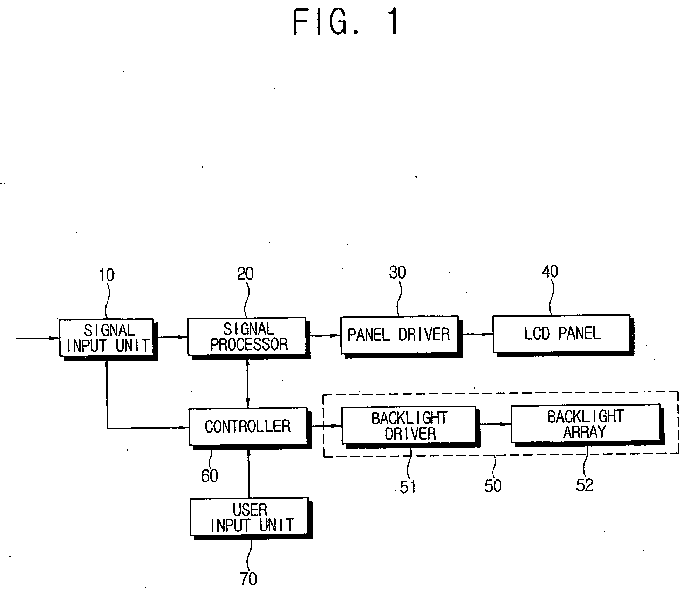

As shown in FIG. 1, an LCD apparatus according to an embodiment of the present invention includes a signal input unit 10, a signal processor 20, a panel driver 30, an LCD panel 40, a backlight unit 50, and a controller 60 that controls them.

The LCD panel 40 includes a first substrate formed with a switching device and a pixel electrode; a second substrate formed with R, G, and B color filters; and a liquid crystal sandwiched between the first and second substrates. A signal from the panel driver 30 is transmitted to the switching device via a source printed circuit board (PCB) and a gate PCB of the first substrate. Thus, an electric signal is applied to the liquid crystal to transmit or intercept light emitted from a backlight array 52 or to adjust an amount of the transmitted light, thereby displaying a picture.

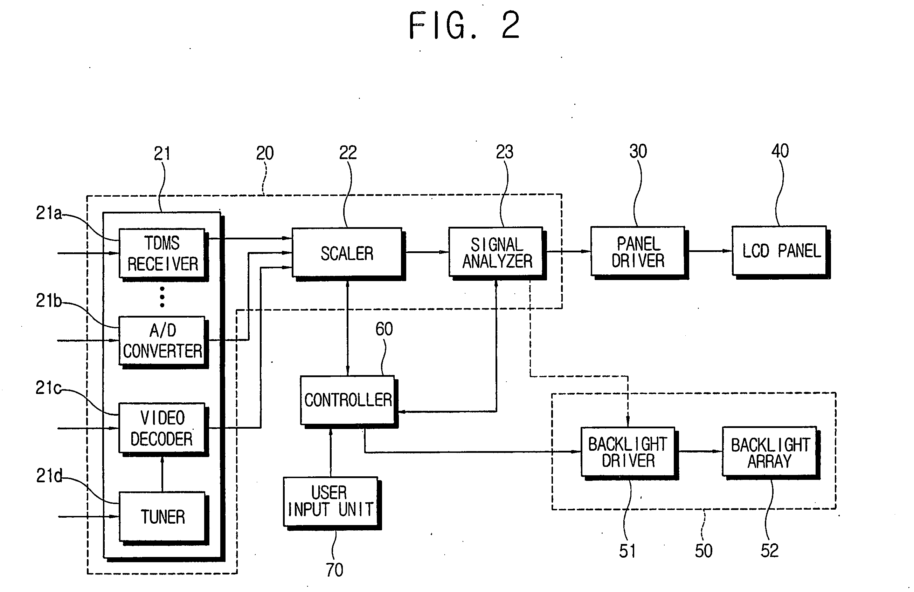

The signal processor 20 transforms a video signal input through the signal input unit 10 into a video signal having a format adaptive to a display part, namely the LCD panel 40. According to an exemplary embodiment of the present invention, the signal processor 20, as shown in FIG. 2, comprises a scaler 22 and a signal transformer 21 converting the video signal input through the signal input unit 10 into a signal suitable for the scaler.

According to an exemplary embodiment, the signal transformer 21 comprises a tuner 21d tuning in a signal selected from among broadcast (radio frequency or "RF") signals input through an antenna (not shown) or a cable (not shown), and a video decoder 21c transforming the broadcast signal selected by the tuner 21d to a signal having a format suitable for the scaler 22. Further, the signal transformer 21 may include a transition minimized differential signaling (TMDS) receiver 21a, an analog/digital (A/D) converter 21b, etc. to process a video signal inputted from an external video apparatus such as a digital video disc (DVD) player, a VCR (video cassette recorder), or the like.

The scaler 22 may transform the video signal output from the signal transformer 21 to have a vertical frequency, resolution, aspect ratio, etc., adaptive to an output scale.

The signal input unit 10 receives the video signal and transmits it to the signal processor 20. Here, the signal input unit 10 has various configurations corresponding to those of the aforementioned signal transformer 21. For example, the signal input unit 10 may include an analog input terminal to receive and transmit an input analog video signal to the A/D converter 21b and a digital input terminal to support a low-voltage differential signaling (LVDS) or TMDS interface for a digital video signal input. Further, the signal input unit 10 may include the aforementioned antenna or cable to receive the broadcast signals through the tuner 21d.

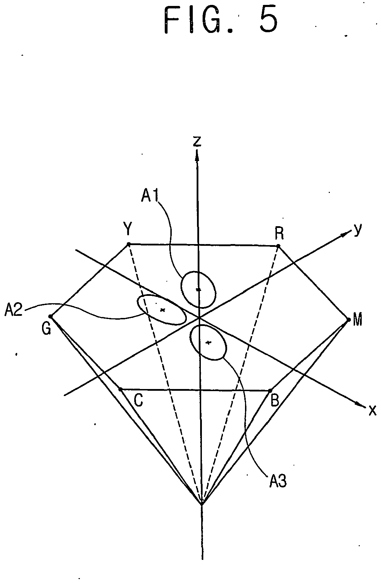

Further, the signal processor 20 according to an exemplary embodiment includes a signal analyzer 23. The signal analyzer 23 analyzes the video signal output from the scaler 22 and outputs transform objective information corresponding to the analyzed result. It is contemplated that the signal analyzer 23 detects whether each pixel based on the video signal is a transform objective pixel distributed within a preset transform objective region (e.g., A1, A2, A3 in Fig. 5) of color coordinates and outputs information about the detected transform objective pixel as transform objective information. Detailed descriptions of the transform objective information and a method of detecting such in an exemplary signal analyzer 23 will be described later.

The backlight unit 50 according to an exemplary embodiment comprises the backlight array 52 and a backlight driver 51, and emits light to the LCD panel 40, thereby allowing the LCD panel 40 to display a picture. The backlight array 52 includes a plurality of light emitting devices to illuminate with a plurality of colors. The light emitting device according to an embodiment of the present invention includes a light emitting diode (LED). Here, the LED separately includes an R-LED emitting red light, a G-LED emitting green light, and a B-LED emitting blue light. The LED may be a united LED which can selectively emit all red light, green light, and/or blue light. Thus, a picture displayed on the LCD panel 40 may have wide range colors of color coordinates. Furthermore, the backlight array 52 may realize a short response time for control of the backlight driver 51.

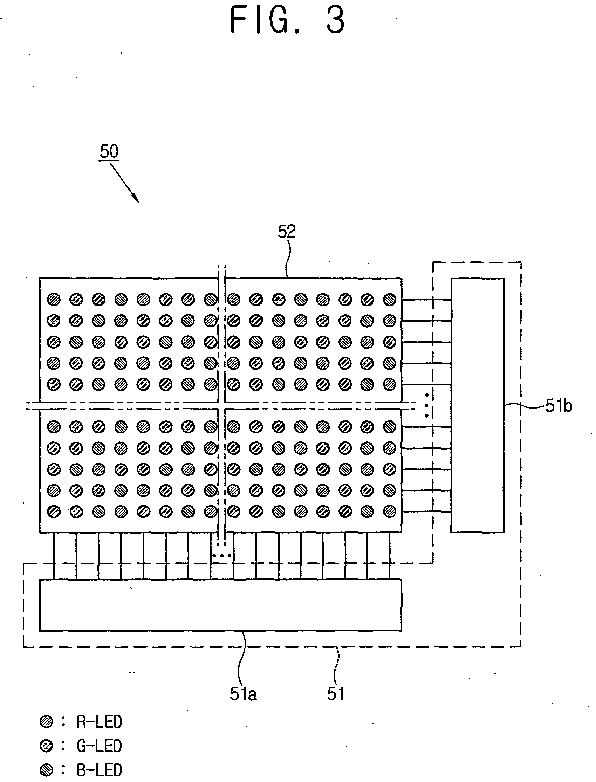

The respective R-, G-, and B-LEDs may be arranged to have a predetermined pattern on the backlight array 52 as shown in FIG. 3. For example, the respective R-, G-, and B-LEDs may have a pattern of "R-G-G-B-R-G-G-B-R-G-G-B......" along a transverse direction of the LCD panel 40. The respective R-, G-, and B-LEDs may also have a pattern of "R-G-B......", "R-R-G......", or "R-G-B-B.....", or the like, for example. The respective R-, G-, and B-LEDs are arranged to have an optimum arrangement pattern in consideration of the properties thereof such as maximum brightness, etc., thereby allowing the LCD panel 40 to display a picture with natural color. The light emitting diodes (R-LED, G-LED, B-LED) may be arranged as compact as the corresponding pixels of the LCD panel 40. Thus, color or brightness of a picture displayed on the LCD panel 40 is emphasized according to an irradiating LED among the respective R-, G-, and B-LEDs disposed behind each pixel or a light intensity thereof, thereby enhancing picture contrast.

The backlight driver 51 drives the respective R-, G-, and B-LEDs to emit light or not emit light and to adjust the intensity of the emitted light in response to a control signal from the controller 60. The backlight driver 51 adjusts the intensity of electric current to be applied to the respective R-, G-, and B-LEDs, and therefore adjusts the intensity of the light emitted from the respective R-, G-, and B-LEDs. It is contemplated that the backlight driver 51 includes a horizontal driver 51a and a vertical driver 51b to drive the respective R-, G-, and B-LEDs to emit light and to adjust the light intensity thereof in response to the control signal transmitted from the controller. Therefore, the respective R-, G-, and B-LEDs are controlled to emit the light and to adjust the light intensity thereof on the basis of a combination of signals transmitted from the horizontal driver 51a and the vertical driver 51b. The controller 60 controls the backlight driver 51 to transform the display state of a picture displayed on the LCD panel 40 on the basis of the transform objective information.

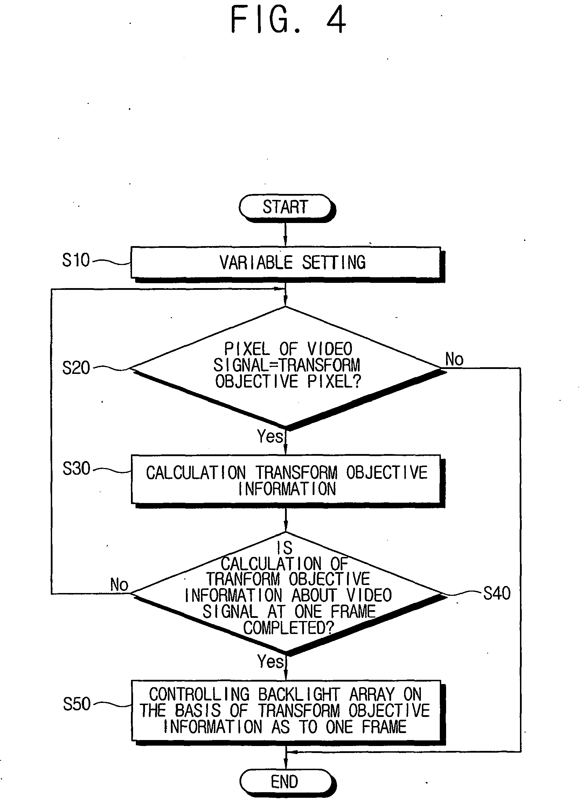

An exemplary method of controlling the LCD apparatus will now be described with reference to FIG. 4.

In S20, the signal analyzer 23 receives a video signal including a brightness signal and a color difference signal, and the signal analyzer 23 detects whether each pixel based on the video signal is a transform objective pixel distributed within a preset transform objective region A1, A2, A3 of the color coordinates.

For example, a method of detecting whether each pixel based on the video signal is a transform objective pixel distributed within the preset transform objective region A1, A2, A3 of the color coordinates may be as follows:

First, in S10, the signal analyzer 23 may be previously set to have a variable defining the transform objective region A1, A2, A3 in the color coordinates. For example, when the transform objective region A1, A2, A3 has an elliptical shape, the transform objective region A1, A2, A3 is determined in the color coordinates with the variables such as a major axis, a minor axis, an origin, an area, etc. to geometrically define the elliptical shape. Then, coordinates of the pixel in the color coordinates are calculated on the basis of the brightness signal and the color difference signal. On the basis of the calculated coordinates for the pixel and the variables to define the transform objective region A1, A2, A3, it is detected whether the pixel is the transform objective pixel distributed in the transform objective region A1, A2, A3.

FIG. 5 illustrates the transform objective region A1, A2, A3 in a YCbCr color coordinates among the color coordinates, for example. The transform objective region A1, A2, A3 according to an exemplary embodiment of the present invention is defined by a set of the plurality of colors in the color coordinates. Here, the transform objective region A1, A2, A3 may be defined by a geometrical equation such as an elliptical equation in the color coordinates so as to easily determine the transform objective region A1, A2, A3 and calculate the transform objective pixel.

Further, the transform objective region A1, A2, A3 may be defined on the basis of distribution of a memorial color matched with a predetermined objective. A memorial color may mean an inherent color of an object such as a familiar thing, which is perceived by a user. According to an exemplary embodiment of the present invention, a skin color, a color of the sky, and/or a color of grass (or a dark green) may be employed as the memorial color. However, other objects such as the sun, etc. may provide the memorial color. Generally, the memorial color is, as shown in FIG. 5, distributed as a substantially elliptical shape in brightness, color and saturation coordinates. In the color coordinates shown in FIG. 5, the transform objective regions A1, A2 and A3 are, by way of example, based on the skin color, the sky blue, and the dark green, respectively.

Meanwhile, when it is determined at S20 that the pixel is the transform objective pixel, the coordinates on the backlight array 52 corresponding to a position of the transform objective pixel on the LCD panel 40 are calculated. Thus, the respective R-, G-, and B-LEDs of the backlight array 52 corresponding to the position of the transform objective pixel on the LCD panel 40 are determined.

Then, on the basis of transform values preset as to the transform objective regions A1, A2 and A3, it is calculated whether the respective R-, G-, and B-LEDs emit light and what degree of intensity the light will have. For example, in the case where the transform objective region A1, A2 and A is of the sky blue, the B-LED among the R-, G-, B-LEDs corresponding to the transform objective pixel is adjusted to have high intensity of light or is adjusted in the ratio of the light intensity relative to the R-LED and the G-LED.

Therefore, in S30, there is calculated the transform objective information about the coordinates on the backlight array 52 corresponding to the respective calculated transform objective pixel, whether or not the corresponding LED emits light, and the light intensity of the LED.

At S40, when the transform objective information about the pixel is completely calculated at one frame of the video signal, at operation S50, the controller 60 controls the backlight driver 51 to drive the respective R-, G-, and B-LEDs of the backlight array 52 on the basis of the transform objective information with respect to one frame, thereby adjusting the display state of a picture displayed on the LCD panel 40.

Additionally, the transform objective region A1, A2, A3 according to an exemplary embodiment of the present invention may include a black region or a white region. When the signal analyzer 23 determines that the pixel of the input video signal is distributed within the black region, the controller 60 may control the backlight driver 51 to drive the respective R-, G-, and B-LEDs corresponding to the pixel distributed within the black region to stop emitting the light. Alternately, when the signal analyzer 23 determines that the pixel of the input video signal is distributed within the white region, the controller 60 may control the backlight driver 51 to drive the respective R-, G-, and B-LEDs corresponding to the pixel distributed within the white region to be increased in the light intensity. Thus, the contrast of a picture displayed on the LCD panel 40 is enhanced.

Referring to FIGS. 1 and 2, the LCD apparatus according to an exemplary embodiment of the present invention further includes a user input unit 70 allowing a user to input a control signal. At this time, a user can input the foregoing transform value through the user input unit 70.

Further, a user can control the backlight unit 50 through the user input unit 70. For example, when a user adjusts the brightness of a picture displayed on the LCD panel 40 through the user input unit 70, the controller 60 controls the backlight driver 50 to adjust the brightness.

Here, the user input unit 70 may include a selection button (not shown) provided in a front of or on the LCD apparatus and a signal generator generating a control signal when the selection button is pressed. Further, the user input unit 70 may include a remote controller and a remote signal receiver generating a control signal in response to a remote signal received from the remote controller. The user input unit 70 may have any suitable configuration as long as the user input unit 70 can transmit a control signal to the controller 60.

In the foregoing illustrative, non-limiting embodiment, the signal processor 20 includes the signal analyzer 23. However, the signal analyzer 23 may be provided separately from the signal processor 20. For example, the signal processor 20 and the signal analyzer 23 may be incorporated into one chipset or may be provided as separate chipsets.

According to an exemplary embodiment of the present invention, the transform objective information is transmitted from the signal analyzer 23 to the controller 60, and the controller 60 controls the backlight driver 51 on the basis of the transmitted transform objective information, wherein the transform objective information may be partially transmitted from the signal analyzer 23 to the backlight driver 51.

Thus, there are provided the backlight array 52 in which the plurality of light emitting devices illuminating the LCD panel 40 with the plurality of colors are arranged to have a predetermined pattern; the backlight driver 51 drives each light emitting device to emit light and adjusts the light intensity; the signal analyzer 23 analyzes the input video signal and outputs the transform objective information on the basis of the analyzed result; and the controller 60 controls the backlight driver 51 to adjust the display state of a picture displayed on the LCD panel 40 on the basis of the transform objective information from the signal analyzer 23 so that the display state of a picture displayed on the LCD panel 40 can be adjusted by analyzing the input video signal and controlling the backlight unit 50.

As described above, the present invention provides a method and apparatus of controlling an LCD which allows a picture displayed on an LCD panel to have wide range colors of color coordinates and includes a backlight unit having a short response time.

Further, the present invention provides a method and apparatus of controlling an LCD, in which a display state of a picture displayed on an LCD panel is adjusted by analyzing an input video signal and controlling a backlight unit.

Although illustrative, non-limiting embodiments of the present invention have been shown and described, it will be appreciated by those skilled in the art that changes may be made in these embodiments without departing from the principles of the invention, the scope of which is defined in the appended claims and their equivalents.

## Claims

1. An LCD apparatus with an LCD panel (40) arranged to display a picture corresponding to a received video signal comprising a brightness signal and a color difference signal, said LCD apparatus comprising:
a backlight array (52) having a plurality of light emitting devices, each of said plurality of light emitting devices comprising a red light emitting diode (R-LED), a green light emitting diode (G-LED), and a blue light emitting diode (B-LED), said backlight being arranged to illuminate the LCD panel with a plurality of colors;
a backlight driver (51) arranged to drive the plurality of light emitting diodes of said plurality of light emitting devices to emit or not light and to adjust the light intensity of said light emitting diodes;
a signal analyzer (23) arranged to analyze the input video signal;
**characterized in that,** said signal analyzer is further arranged to:
output transform objective information, said transform objective information including
firstly a determination of the respective red, green, and blue light emitting diodes whose positions on the backlight array correspond to positions of transform objective pixels on the LCD panel, said transform objective pixels being pixels in the video signal having their color coordinates within a preset region in a color space, said region being referred to as transform objective region (A1, A2, A3), and
secondly the degree of intensity of light emission of said red, green, and blue light emitting diodes based on transform preset values associated to said transform objective region;
**and in that,** said LCD apparatus further comprises a controller (60) arranged to control said backlight driver (51) based on the transform objective information from said signal analyzer.

2. The LCD apparatus according to claim 1, wherein the transform objective region comprises at least one of a white region and a black region in said color space.

3. The LCD apparatus according to claim 2, wherein the controller controls the backlight driver to turn off the light emitting diode of the backlight array corresponding to a pixel distributed within the black region when the signal analyzer determines that the pixel of the input video signal is distributed within the black region.

4. The LCD apparatus according to claim 3, wherein the transform objective region has an elliptical shape in said color space.

5. A method of controlling an LCD apparatus with an LCD panel (40) arranged for displaying a picture corresponding to a video signal received at a signal input (10) comprising a brightness signal and a color difference signal, the method comprising:
providing a backlight array (52) in which a plurality of light emitting devices illuminate the LCD panel with a plurality of colors, wherein each of said plurality of light emitting devices comprises a red light emitting diode (R-LED), a green light emitting diode (G-LED), and a blue light emitting diode (B-LED);
analyzing said input video signal;
**characterized in that,** the method further comprises the steps of:
determining the respective red, green, and blue light emitting diodes whose positions on the backlight array correspond to positions of transform objective pixels on the LCD panel, said transform objective pixel to being pixels in the video signal having their color coordinates within a preset region in a color space, said region being referred to as transform objective region (A1, A2, A3);
calculating information about the degree of intensity of light emission of said determined red, green, and blue light emitting diodes based on transform preset values associated to said transform objective region;
**and in that,** said method further comprises the step of controlling the light intensity of said corresponding light emitting diodes based on said calculated information.

6. The method according to claim 5, wherein the transform objective region comprises at least one of a white region and a black region in said color space and wherein said controlling of said corresponding light emitting diodes to emit light and to adjust light intensity includes turning off the corresponding light emitting diodes corresponding to the transform objective pixel distributed within the black region when the transform objective pixel is distributed within the black region.

7. The LCD apparatus according to any of the claims 1-4, wherein the plurality of light emitting diodes are arranged to have a predetermined pattern.

8. The method according to claim 5 or 6, wherein the plurality of light emitting diodes are arranged to have a predetermined pattern.

## Patentansprüche

1. LCD-Vorrichtung mit einer LCD-Tafel (40), die angeordnet ist, um ein Bild anzuzeigen, das einem empfangenen Videosignal entspricht, das ein Helligkeitssignal und ein Farbdifferenzsignal umfasst, wobei die LCD-Vorrichtung umfasst:
eine Hintergrundbeleuchtungsanordnung (52) mit einer Mehrzahl lichtemittierender Einrichtungen, wobei jede der Mehrzahl lichtemittierender Einrichtungen eine rotes Licht emittierende Diode (R-LED), eine grünes Licht emittierende Diode (G-LED) und eine blaues Licht emittierende Diode (B-LED) umfasst, wobei die Hintergrundbeleuchtung angeordnet ist, um die LCD-Tafel mit einer Mehrzahl von Farben zu beleuchten;
einen Hintergrundbeleuchtungstreiber (51), der angeordnet ist, um die Mehrzahl lichtemittierender Dioden der Mehrzahl lichtemittierender Einrichtungen anzusteuern, damit sie Licht emittieren oder nicht und um die Lichtstärke der lichtemittierenden Dioden einzustellen;
einen Signalanalysator (23), der angeordnet ist, um das Eingangsvideosignal zu analysieren;
**dadurch gekennzeichnet, dass** der Signalanalysator weiterhin angeordnet ist, um:
Transformationszielinformationen auszugeben, wobei die Transformationszielinformationen einschließen
erstens eine Bestimmung der jeweiligen rotes, grünes und blaues Licht emittierenden Dioden, deren Positionen auf der Hintergrundbeleuchtungsanordnung Positionen von Transformationszielpixeln auf der LCD-Tafel entsprechen, wobei die Transformationszielpixel Pixel im Videosignal sind, die ihre Farbkoordinaten innerhalb eines vorgegebenen Bereichs in einem Farbraum haben, wobei der Bereich als Transformationszielbereich (A1, A2, A3) bezeichnet wird, und
zweitens den Grad der Stärke der Lichtemission der rotes, grünes und blaues Licht emittierenden Dioden auf Grundlage vorgegebener Transformationswerte, die zu dem Transformationszielbereich gehören;
**und dass** die LCD-Vorrichtung weiterhin einen Controller (60) umfasst, der angeordnet ist, um den Hintergrundbeleuchtungstreiber (51) auf Grundlage der Transformationszielinformationen aus dem Signalanalysator zu steuern.

2. LCD-Vorrichtung nach Anspruch 1, wobei der Transformationszielbereich zumindest einen von einem weißen Bereich und einem schwarzen Bereich in dem Farbraum umfasst.

3. LCD-Vorrichtung nach Anspruch 2, wobei der Controller den Hintergrundbeleuchtungstreiber steuert, um die lichtemittierende Diode der Hintergrundbeleuchtungsanordnung, die einem innerhalb des schwarzen Bereichs verteilten Pixel entspricht, abzuschalten, wenn der Signalanalysator feststellt, dass das Pixel des Eingangsvideosignals innerhalb des schwarzen Bereichs verteilt ist.

4. LCD-Vorrichtung nach Anspruch 3, wobei der Transformationszielbereich eine elliptische Form in dem Farbraum hat.

5. Verfahren zum Steuern einer LCD-Vorrichtung mit einer LCD-Tafel (40), die angeordnet ist zum Anzeigen eines Bilds, das einem an einem Signaleingang (10) empfangenen Videosignal entspricht, das ein Helligkeitssignal und ein Farbdifferenzsignal umfasst, wobei das Verfahren umfasst:
Bereitstellen einer Hintergrundbeleuchtungsanordnung (52), in der eine Mehrzahl lichtemittierender Einrichtungen die LCD-Tafel mit einer Mehrzahl von Farben beleuchtet, wobei jede der Mehrzahl lichtemittierender Einrichtungen eine rotes Licht emittierende Diode (R-LED), eine grünes Licht emittierende Diode (G-LED) und eine blaues Licht emittierende Diode (B-LED) umfasst;
Analysieren des Eingangsvideosignals;
**dadurch gekennzeichnet, dass** das Verfahren weiterhin die Schritte umfasst:
Bestimmen der jeweiligen rotes, grünes und blaues Licht emittierenden Dioden, deren Positionen auf der Hintergrundbeleuchtungsanordnung Positionen von Transformationszielpixeln auf der LCD-Tafel entsprechen, wobei die Transformationszielpixel Pixel im Videosignal sind, die ihre Farbkoordinaten innerhalb eines vorgegebenen Bereichs in einem Farbraum haben, wobei der Bereich als Transformationszielbereich (A1, A2, A3) bezeichnet wird;
Berechnen von Informationen über den Grad der Stärke der Lichtemission der bestimmten rotes, grünes und blaues Licht emittierenden Dioden auf Grundlage vorgegebener Transformationswerte, die zu dem Transformationszielbereich gehören;
**und dass** das Verfahren weiterhin den Schritt des Steuerns der Lichtstärke der entsprechenden lichtemittierenden Dioden auf Grundlage der berechneten Informationen umfasst.

6. Verfahren nach Anspruch 5, wobei der Transformationszielbereich zumindest einen von einem weißen Bereich und einem schwarzen Bereich in dem Farbraum umfasst und wobei das Ansteuern der entsprechenden
lichtemittierenden Dioden, damit sie Licht emittieren und um die Lichtstärke einzustellen, das Abschalten der entsprechenden lichtemittierenden Dioden, die dem innerhalb des schwarzen Bereichs verteilten Transformationszielpixel entsprechen, einschließt, wenn das Transformationszielpixel innerhalb des schwarzen Bereichs verteilt ist.

7. LCD-Vorrichtung nach einem der Ansprüche 1 - 4, wobei die Mehrzahl lichtemittierender Dioden so angeordnet ist, dass sie ein im Voraus festgelegtes Muster haben.

8. Verfahren nach Anspruch 5 oder 6, wobei die Mehrzahl lichtemittierender Dioden so angeordnet ist, dass sie ein im Voraus festgelegtes Muster haben.

## Revendications

1. Appareil LCD présentant un écran LCD (40) agencé pour afficher une image en correspondance à un signal vidéo reçu, comprenant un signal de luminosité et un signal de différentiel de couleurs, ledit appareil LCD comprenant :
une matrice de rétro-éclairage (52) possédant une pluralité de dispositifs électroluminescents, chaque dispositif de ladite pluralité de dispositifs électroluminescents comprenant une diode électroluminescente rouge (R-LED), une diode électroluminescente verte (G-LED), et une diode électroluminescente bleue (B-LED), ledit rétro-éclairage étant agencé pour éclairer l'écran LCD avec une pluralité de couleurs ;
un étage d'entraînement de rétro-éclairage (51) agencé pour entraîner la pluralité de diodes électroluminescentes de ladite pluralité de dispositifs électroluminescents à émettre ou non de la lumière et à ajuster l'intensité lumineuse desdites diodes électroluminescentes ;
un analyseur de signal (23) agencé pour analyser le signal vidéo d'entrée ;
**caractérisé en ce que** ledit analyseur de signal est encore agencé pour:
délivrer une information objective de transformée, ladite information objective de transformée comprenant premièrement, une détermination des diodes
électroluminescentes rouges, vertes, et bleues respectives dont la position dans la matrice de rétro-éclairage correspond à la position des pixels objectifs de transformée de l'écran LCD, lesdits pixels objectifs de transformée consistant en des pixels, dans le signal vidéo, ayant des coordonnées de couleur au sein d'une région prédéterminée d'un espace coloré, ladite région étant dénommée région objective de transformée (A1, A1, A3), et
deuxièmement, le degré d'intensité de l'émission lumineuse desdites diodes électroluminescentes rouges, vertes, et
bleues, sur la base de valeurs prédéfinies de transformée associées à ladite région objective de transformée ;
**et en ce que** ledit appareil LCD comprend en outre une unité de commande (60) agencée pour commander ledit étage d'entraînement de rétro-éclairage (51) sur la base de l'information objective de transformée provenant dudit analyseur de signal.

2. Appareil LCD selon la revendication 1, dans lequel la région objective de transformée comprend une région blanche et/ou une région noire dans l'espace coloré.

3. Appareil LCD selon la revendication 2, dans lequel l'unité de commande commande à l'étage d'entraînement de rétro-éclairage d'éteindre la diode électroluminescente de la matrice de rétro-éclairage correspondant à un pixel réparti dans la région noire lorsque l'analyseur de signal détermine que le pixel du signal vidéo d'entrée est réparti dans la région noire.

4. Appareil LCD selon la revendication 3, dans lequel la région objective de transformée présente une forme sensiblement elliptique dans ledit espace coloré.

5. Procédé de commande d'un appareil LCD présentant un écran LCD (40), agencé pour afficher une image en correspondance à un signal vidéo reçu au niveau d'une entrée de signal (10), comprenant un signal de luminosité et un signal de différentiel de couleurs, le procédé comprenant :
la mise à disposition d'une matrice de rétro-éclairage (52) dans laquelle une pluralité de dispositifs
électroluminescents éclairent l'écran LCD avec une pluralité de couleurs, chaque dispositif de ladite pluralité de dispositifs électroluminescents comprenant une diode électroluminescente rouge (R-LED), une diode électroluminescente verte (G-LED), et une diode électroluminescente bleue (B-LED),
l'analyse dudit signal vidéo d'entrée ;
**caractérisé en ce que** le procédé comprend en outre les étapes consistant à :
déterminer les diodes électroluminescentes rouges, vertes,
et bleues respectives dont la position dans la matrice de rétro-éclairage correspond à la position des pixels objectifs de transformée de l'écran LCD, lesdits pixels objectifs de transformée consistant en des pixels, dans le signal vidéo, ayant des coordonnées de couleur au sein d'une région prédéterminée d'un espace coloré, ladite région étant dénommée région objective de transformée (A1, A1, A3) ;
calculer des informations relatives au degré d'intensité de l'émission lumineuse desdites diodes électroluminescentes rouges, vertes, et bleues déterminées, sur la base de valeurs prédéfinies de transformée associées à ladite région objective de transformée ;
**et en ce que** ledit procédé comprend en outre l'étape de commande de l'intensité lumineuse desdites diodes électroluminescentes correspondantes, sur la base desdites informations calculées.

6. Procédé selon la revendication 5, dans lequel la région objective de transformée comprend une région blanche et/ou une région noire dans ledit espace coloré, et dans lequel ladite commande desdites diodes électroluminescentes correspondantes en vue d'émettre de la lumière et d'ajuster l'intensité lumineuse comprend l'extinction des diodes électroluminescentes correspondantes en correspondance au pixel objectif de transformée réparti dans la région noire lorsque le pixel objectif de transformée est réparti dans la région noire.

7. Appareil LCD selon l'une quelconque des revendications 1 à 4, dans lequel la pluralité de diodes électroluminescentes est agencée selon une configuration prédéterminée.

8. Procédé selon la revendication 5 ou 6, dans lequel la pluralité de diodes électroluminescentes est agencée selon une configuration prédéterminée.
